# EUROPEAN PATENT SPECIFICATION

(11) **EP 0 375 268 B1**
(45) Date of publication and mention of the grant of the patent: **08.11.1995**
(21) Application number: 89313057.5
(22) Date of filing: 13.12.1989
(51) Int. Cl.: G02F 1/133

(54) **Liquid crystal display device**
Flüssigkristall-Anzeigevorrichtung
Dispositif d'affichage à cristal liquide

(30) Priority: 21.12.1988 JP 320565/88
(43) Date of publication of application: 27.06.1990
(73) Proprietor: International Business Machines Corporation, Armonk, N.Y. 10504 (US)
(72) Inventor: Ikeda, Ayumi, 227 Yokohama-city,Kanagawa prefecture (JP); Koseki, Toshihiko, Yokohama-shi Kanagawa-ken (JP); Ueki, Toshihiro, Machida-shi Tokyo-to (JP)
(74) Representative: Burt, Roger James, Dr.

(56) References cited:
- EP-A- 0 271 313
- PATENT ABSTRACTS OF JAPAN, vol. 2, no. 286 (P-244)[1431], 21st December 1983; & JP-A-58 159 520
- PATENT ABSTRACTS OF JAPAN, vol. 12, no. 95 (P-681), 29th March 1988; & JP-A-62 227 120

## Description

This invention relates to a liquid crystal display device.

Japanese Published Unexamined Patent Application (PUPA) No. 62-145218 discloses a display device fabricated by forming a common electrode on one of two glass substrates between which liquid crystals are located, and forming a thin-film transistor on the other substrate so as to form picture element electrodes on the glass substrate on which the common electrode has been formed. A further layer is provided to shade the gaps between the picture element electrodes and the area of the thin-film transistor of the glass substrate with the picture element electrodes and thin-film transistor formed thereon.

Since this type of display device has the light shielding layer formed on the glass substrate facing towards the other glass substrate on which the picture element electrodes and the thin-film transistors are formed, highly accurate alignment is required on assembling the two glass substrates. The substrates may be misaligned when they are bonded together due to the conditions under which they are assembled. Also, there is a problem that light entering through the picture element electrodes is reflected by the light shielding area formed on the glass substrate facing to the picture element electrodes and is made incident upon the thin film transistors to cause current leakage.

Japanese Published Unexamined Patent Application (PUPA) No. 62-227120 discloses the formation, in a display device, of a light shielding layer with a pattern corresponding to the pattern of a non-display area on a transparent substrate having a transparent electrode with a pattern corresponding to the pattern of a display area. The light shielding layer is formed by screen-printing over the pattern of the non-display area with a black ink comprising a thermosetting acrylic resin in which a carbon black pigment is dispersed. The thermosetting acrylic resin may be formed from a polyimide solution in which a carbon black pigment is dispersed.

This type of light shielding layer is formed by a printing method and has problems in connection with locational accuracy and defects with increase in accuracy and capacity.

Japanese Published Unexamined Patent Application (PUPA) No. 62-253123 discloses the formation, in a display device, of an array of electrodes consisting of a transparent conducting material substrate the surface of which is coated with an opaque layer. A light shielding layer is formed by applying a dyeable negative type photoresist material evenly to the surface of the transparent substrate with the array of electrodes formed thereon, exposing the photoresist material from the opposite side of the transparent substrate, developing the photoresist material to leave the exposed area of the photoresist, and dyeing the remaining photoresist material.

This type of light shielding layer is formed by a dyeing method and there are problems that dye molecules will enter into and swell the base material on dyeing, which makes the film too thick to realize the optical density O.D. ≧ 2.5 required by a shading layer. Further, the light shielding layer does not resist high temperatures.

Japanese Published Unexamined Patent Application (PUPA) No. 56-107287 discloses a display device employing a thin film of amorphous silicon as a switching element to drive liquid crystals, and having a metal film for preventing light from entering into the thin amorphous silicon film.

This type of light shielding layer is formed of a metal and etching is required. This often results in the picture element electrodes and data entry wiring being damaged.

JP-A 58-159520 and EPA-271313 both disclose devices having light shielding layers formed on the same substrate as the picture electrodes. The light shielding layers are formed both under and over the thin film transistors, and are made of metal or metallic silicon in JP-A 58-159520 and amorphous silicon, metal or an acrylic resin in EPA-271313. Both documents use etching to pattern the light shielding layer, and therefore suffer from the same disadvantages as discussed above in relation to JPA-56-107287.

The object of the present invention is to provide an improved liquid crystal display device and an improved method of manufacturing such a device.

The present invention provides a liquid crystal display device having first and second transparent substrates separated by a layer of liquid crystals, a plurality of spaced apart transparent picture element electrodes formed on the inner surface of the first substrate, a plurality of switching elements formed on said surface adjacent to the picture element electrodes, and a light shielding layer formed on said surface between the picture elements and over the switching elements; characterised in that the light shielding layer comprises a black negative photoresist material.

The present invention also provides a method of manufacturing a liquid crystal display device having first and second transparent substrates separated by a layer of liquid crystals, a plurality of spaced apart transparent picture element electrodes formed on the inner surface of the first substrate, a plurality of switching elements formed on said surface adjacent to the picture element electrodes, and a light shielding layer formed on said surface between the picture elements and over the switching elements, said method including the steps of: forming a transparent conducting layer on the inner surface of the first transparent substrate; applying a positive photoresist to the transparent conducting layer, and exposing the photoresist through a mask to form the picture element electrodes; applying a black negative photoresist over said surface; and exposing the negative photoresist through said mask, and removing the part of the negative photoresist that was not exposed to form said light shielding layer.

In order that the invention may be more readily understood, an embodiment will now be described with reference to the accompanying drawings in which:
Fig. 1 is a schematic perspective view of a liquid crystal display device,
Fig. 2 is a schematic perspective view illustrating the state of one of two glass substrates in the liquid crystal display device shown in Fig. 1 during the process of fabrication,
Fig. 3 is a side view in cross section of a picture element region in the liquid crystal display device shown in Fig. 1, and
Figs. 4(a) to 4(j) are side views in cross section illustrating steps of a process for producing a liquid crystal display device as shown in Fig. 1.

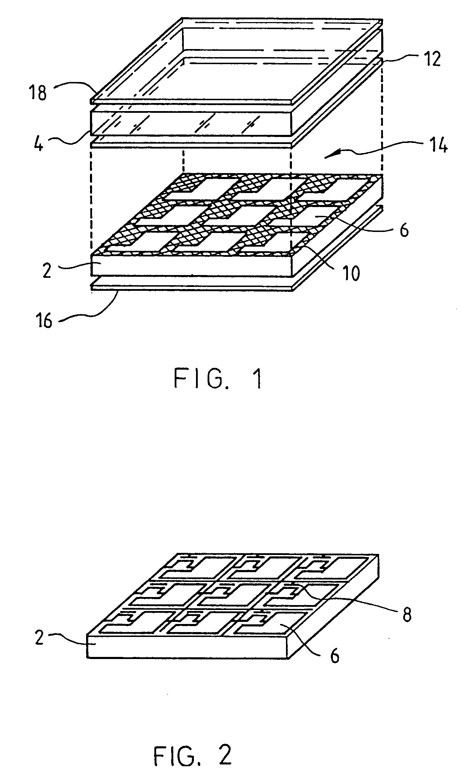

Fig. 1 shows a liquid crystal display device which includes two glass substrates 2 and 4 facing each other with a certain distance between them. As shown in Fig. 2, on the inner surface of the glass substrate 2 (i.e. the surface facing the glass substrate 4) are provided a plurality of transparent picture element electrodes 6 each formed from indium tin oxide (hereafter called ITO) and a plurality of thin-film transistors 8 (hereafter called TFT) to control voltages applied to picture element regions of liquid crystals as will be described below.

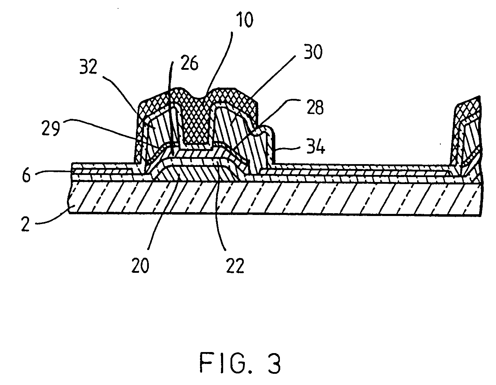

A light shielding layer 10 (more clearly shown in Fig. 3), consisting of an acrylic resin having a cross-linked structure in which carbon black particles are dispersed, is formed between the picture element electrodes 6 and on the TFTs 8 on the glass substrate 2. A transparent common electrode 12 consisting of ITO is formed on the surface of the glass substrate 4 facing the glass substrate 2. Twisted nematic (TN) type liquid crystals 14 are located in the space between the picture element electrodes 6 and the common electrode 12. Polarizing plates 16 and 18 are provided outside the glass substrates 2 and 4, respectively.

If the liquid crystal display device shown in Fig. 1 is constituted as a normally-black type display device, the liquid crystals in each picture element region will transmit white light when the corresponding TFT 8 is "on". If the liquid crystal display device is constituted as a normally-white type display device, liquid crystals in each picture element region will transmit white light when the corresponding TFT 8 is "off".

Since the light shielding layer 10 prevents light from passing between adjacent picture element electrodes 6 and also prevents light reflected by the glass substrate 4 from entering into each TFT 8, clear images are displayed by the picture element regions, and no current leakage occurs from each TFT 8. Further, since the light shielding layer 10 is formed on the surfaces of the picture element electrodes 6, unlike in the device described in Japanese PUPA 62-145218 (see above) in which a light shielding layer is formed on the surface of a common electrode corresponding to the common electrode 12, the alignment of the picture element regions with the light shielding layer is not difficult.

The light shielding layer 10 is formed from an acrylic resin having a cross-linked structure in which carbon black particles are dispersed. The acrylic resin, having a cross-linked structure, can be produced by exposing, developing and etching a negative photoresist material containing an acrylic resin and a photopolymerization initiator. Therefore, the light shielding layer 10 is easy to fabricate precisely and is suitable for liquid crystal display devices with large, high-resolution screens. Also, since carbon black is dispersed in the resin as a colouring material, the difficulty of orientation processing due to a light shielding layer, which occurs in a dyeing method (see Japanese PUPA 62-253123 above, for example), is eliminated.

Fig. 3 shows a side view in cross section of one picture element region in the liquid crystal display device shown in Fig. 1. A gate electrode 20 of the TFT associated with the region, consisting of tantalum (Ta), is formed on a glass substrate 2. A TFT gate insulation layer 22, consisting of SiO₂, is formed on the gate electrode 20 and the glass substrate 2. An i-type semiconductor layer 26, consisting of a-Si, is formed on the TFT channel region of the gate insulation layer 22, and n⁺ type semiconductor layers 28 and 29, each consisting of a-Si, are formed in the source and drain regions respectively of the i-type semiconductor layer 26 of TFT.

A picture element electrode 6, consisting of ITO, is formed on the insulation layer 22 in a part of the picture element region other than that in which the TFT has been formed. A source electrode 30 and a drain electrode 32, consisting of a double structure of molybdenum (Mo) and aluminium (Al), are formed on the n⁺ type semiconductor layers 28 and 29 of a-Si. A passivation layer 34, consisting of SiNₓ, is formed over the source electrode 30, the drain electrode 32, and the picture element electrode 6. A light shielding layer 10, comprising a negative photoresist containing a black pigment consisting of carbon black, is formed on the area of the passivation layer 34 other than the region where the picture element electrode 6 is formed. This shielding layer 10 prevents light from entering into the i-type semiconductor layer 26 of a-Si, which is the channel of the TFT, and from passing through the region between adjacent picture element electrodes 6.

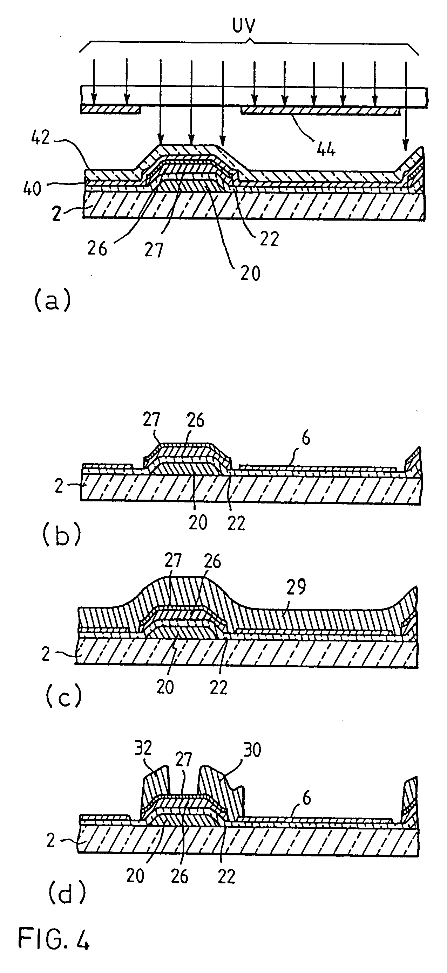

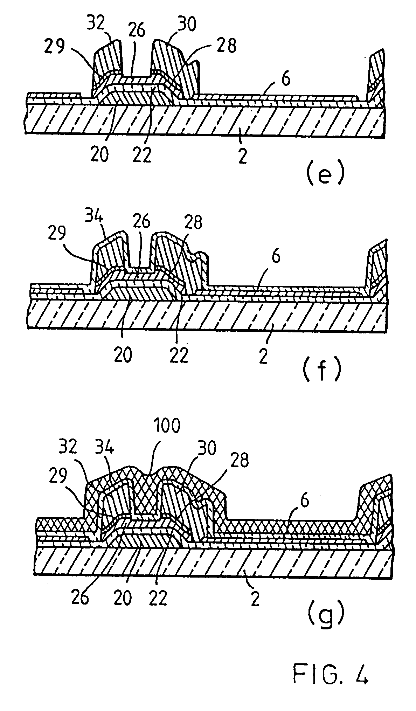

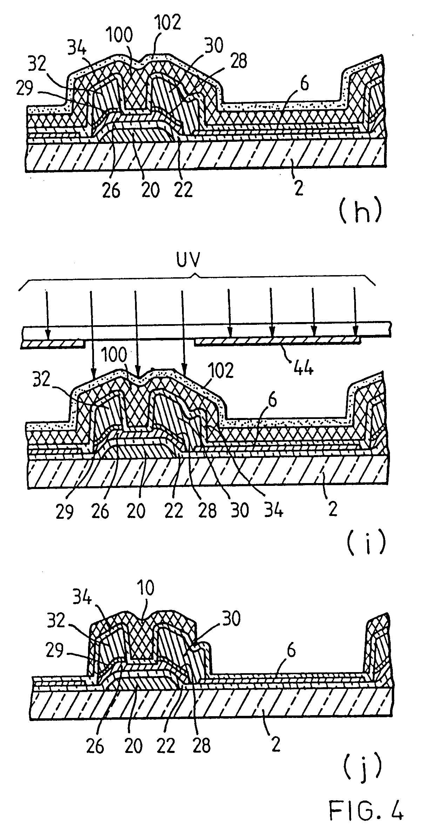

Figs. 4(a) - (j) illustrate successive steps in a process for producing a liquid crystal display device as shown in Fig. 1 and Fig. 3. Referring first to Fig. 4(a), the gate electrode 20, consisting of tantalum, is formed on the glass substrate 2; the gate insulation layer 22, consisting of SiO₂, is formed on the gate electrode 20 and the glass substrate 2; the i-type semiconductor layer 26, consisting of a-Si, and an n⁺ type semiconductor layer 27, consisting of a-Si, are sequentially laminated in a TFT channel region on the gate insulation layer 22; an ITO layer 40 is deposited on the n⁺ type a-Si semiconductor layer 27 and the insulation layer 22 by sputtering; and a positive photoresist material 42 for forming a pattern in the ITO layer 40 is applied to the top surface of the ITO layer 40.

To form picture element electrodes by patterns in the ITO layer 40, ultraviolet rays (UV) are irradiated onto the positive photoresist material 42 using a mask 44 to shade each picture element electrode region. The positive photoresist material 42 is then developed with a developer solution and the ITO layer 40 is wet-etched. By removing the remaining positive photoresist material of the ITO layer 40 with an alkaline lift-off agent, the picture element electrode 6 is formed (Fig. 4(b)). Since the ITO layer does not resist acids but resists alkalis, no damage will occur if a positive photoresist, for which an alkaline lift-off agent is usable, is used for forming the pattern.

Next, as shown in Fig. 4(c), a double layer 29, consisting of an Mo layer and an Al layer, is deposited by sputtering. A positive photoresist material is applied to the double layer 29 and is then exposed using a mask (not illustrated) to shade the photoresist material selectively so that source and drain electrodes, data and address lines, and an electrode pad are formed and developed. The double layer 29 is etched to form a source electrode 30 and a drain electrode 32 as shown in Fig. 4(d), as well as data and address lines and an electrode pad (not shown).

The n⁺ type a-Si layer 27 in the TFT channel between the source electrode 30 and the drain electrode 32 is then removed by chemical dry etching using electrodes 30 and 32 as masks (Fig. 4(e)). An SiNₓ layer is then deposited by sputtering, formed into a pattern using a positive photoresist material, and etched to form a passivation layer 34 as shown in Fig. 4(f).

Black negative photoresist material 100, prepared by adding a photopolymerization initiator and a black pigment consisting of carbon black to an acrylic resin consisting of oligoester diacrylate synthesized from maleic anhydride and polyethylene glycol, and diluted with a solvent consisting of ethyl cellosolve (2-ethoxy ethanol), is applied to the surface of the passivation layer 34 using a spin coater to a thickness of about 1.0 to about 2.5 µm at which the optical density (O.D.) is not lower than 2.5. The photoresist material 100 is then prebaked to evaporate the solvent (Fig. 4(g)).

The mechanism of photopolymerization is that the photopolymerization initiator promotes the cross linkage of the resin in the form of radicals. If oxygen is present, however, the radicals are consumed and the cross linkage reaction does not take place. Therefore, an oxygen barrier layer 102, consisting of water soluble polyvinyl alcohol which has a high transmissivity that does not affect ultraviolet irradiation and does not dissolve the black negative photoresist material 100, is applied to the surface of the black negative photoresist material 100 (Fig. 4(h)).

The black negative photoresist material 100 is then exposed to ultraviolet rays using a mask 44 identical to the mask used for the formation of the picture element electrode 6, as shown in Fig. 4(i). Since the black negative photoresist material 100 is of a negative type, only the area exposed to ultraviolet rays is left. The remaining black negative photoresist material 100 is developed with a surface active agent and post-baked to form a light shielding layer 10 as shown in Fig. 4(j).

Since the acrylic resin used in the black negative photoresist material 100 is suitable for precision processing and has high transparency and pigment dispersing ability, it is suitable for use in forming a delicate light shielding layer. Also, since a weak alkaline surface active agent or water can be used as a developer for the acrylic resin, the picture element electrode 6 made of ITO, the source electrode 30 and the drain electrode 32 will not be damaged.

Since the black photoresist material 100 consists of a photoresist material in which carbon black pigment is dispersed, the light shielding layer is not so thick as to make the orientation of liquid crystals difficult, which occurs in a light shielding layer prepared by a dyeing method, and resists annealing well at about 250°C to recover TFT properties.

Although oligoester diacrylate prepared from maleic anhydride and polyethylene glycol is used in the above described arrangement as the acrylic resin, the following acrylic resins could be used alternatively:
(1) Acrylic ester of polyhydric alcohols such as:
   ethylene glycol diacrylate,
   diethylene glycol diacrylate,
   triethylene glycol diacrylate,
   polyethylene glycol diacrylate, and
   1, 4-butane diol diacrylate
(2) Polyester polyacrylates such as:
   diacrylate of phthalic anhydride and diethylene glycol, and
   oligoesterdiacrylate of phthalic anhydride and polyethylene glycol
(3) Urethane acrylates such as:
   di (methacryloxyethyl)-4-methyl-m-phenylene diurethane

Urethane acrylates have the advantage that no oxygen barrier layer (102) is required.

As a developer for an acrylic resin-based black negative photoresist material, water can be used in place of a surface active agent.

Although a light shielding layer is formed on the TFT switching element in the above arrangement, any other switching element formed on a transparent substrate to control voltage supplied to liquid crystals such as MIM (metal-insulator-metal) could be used alternatively.

Since the light shielding layer in the arrangement described above comprises an acrylic resin having a cross-linked structure in which carbon black particles are dispersed and which can be processed easily, the light shielding layer is suitable for liquid crystal display devices with a large screen and high resolution. The layer is not thick and resists high temperature.

By fabricating such a light shielding layer, the picture element electrodes and other electrodes will not be damaged. If a positive photoresist material is used to form picture element electrodes, the mask for the formation of picture element electrodes can be used as it is for the formation of the light shielding layer.

## Claims

1. A liquid crystal display device having first and second transparent substrates (2, 4) separated by a layer of liquid crystals (14), a plurality of spaced apart transparent picture element electrodes (6) formed on the inner surface of the first substrate, a plurality of switching elements (8) formed on said surface, adjacent to the picture element electrodes, and a light shielding layer (10) formed on said surface between the picture elements and over the switching elements;
characterised in that the light shielding layer comprises a black negative photoresist material.

2. The liquid crystal display device of claim 1, in which the light shielding layer comprises an acrylic resin-based photoresist material having carbon black dispersed therein.

3. The liquid crystal display device of claim 2, in which the acrylic resin is cross-linked.

4. The liquid crystal display device of claim 3, wherein the acrylic resin-based photoresist material further includes a photopolymerization initiator.

5. A method of manufacturing a liquid crystal display device having first and second transparent substrates separated by a layer of liquid crystals, a plurality of spaced apart transparent picture element electrodes formed on the inner surface of the first substrate, a plurality of switching elements formed on said surface adjacent to the picture element electrodes, and a light shielding layer formed on said surface between the picture elements and over the switching elements, said method including the steps of:
forming a transparent conducting layer (40) on the inner surface of the first transparent substrate (2);
applying a positive photoresist (42) to the transparent conducting layer, and exposing the photoresist through a mask (44) to form the picture element electrodes (6);
applying a black negative photoresist (100) over said surface; and
exposing the negative photoresist through said mask (44), and removing the part of the negative photoresist that was not exposed to form said light shielding layer (10).

6. The method of claim 5, in which the negative photoresist contains an acrylic resin with carbon black dispersed therein.

7. The method of claim 6, wherein the photoresist material further includes a photopolymerization initiator, whereby cross-linkages are formed in the acrylic resin during said exposing step.

## Patentansprüche

1. Eine Flüssigkristall-Anzeigevorrichtung mit ersten und zweiten transparenten Substraten (2,4), die durch eine Schicht von Flüssigkristallen (14) getrennt sind, eine Vielzahl voneinander getrennt liegender, transparenter Bildelementelektroden (6), die auf der inneren Oberfläche des ersten Substrats gebildet werden, eine Vielzahl von Schaltelementen (8), die auf der an die Bildelementelektroden angrenzenden Oberfläche gebildet werden, und eine lichtabschirmende Schicht (10), die auf der Oberfläche zwischen den Bildelementen und über den Schaltelementen gebildet wird, dadurch gekennzeichnet, daß die lichtabschirmende Schicht ein schwarzes negatives Fotolackmaterial enthält.

2. Die Flüssigkristall-Anzeigevorrichtung gemäß Patentanspruch 1, in der die lichtabschirmende Schicht ein Fotolackmaterial auf Akrylharzbasis mit darin dispergierten Rußschwarzpartikeln enthält.

3. Die Flüssigkristall-Anzeigevorrichtung gemäß Patentanspruch 2, in der das Akrylharz vernetzt ist.

4. Die Flüssigkristall-Anzeigevorrichtung gemäß Patentanspruch 3, in der das Fotolackmaterial auf Akrylharzbasis weiterhin einen Fotopolymerisationsinitiator enthält.

5. Ein Verfahren zur Herstellung einer Flüssigkristall-Anzeigevorrichtung mit ersten und zweiten transparenten Substraten, die durch eine Schicht aus Flüssigkristallen getrennt sind, einer Vielzahl von getrennt voneinander angeordneten, transparenten, auf der inneren Oberfläche des ersten Substrats gebildeten Bildelementelektroden, einer Vielzahl von Schaltelementen, die auf der an die Bildelementelektroden angrenzenden Oberfläche gebildet werden, sowie einer lichtabschirmenden Schicht, die auf der Oberfläche zwischen den Bildelementen und über den Schaltelementen gebildet wird, wobei das Verfahren die folgenden Schritte umfaßt:
Bildung einer transparenten leitenden Schicht (40) auf der inneren Oberfläche des ersten transparenten Substrats (2);
Auftragen eines positiven Fotolacks (42) auf die transparente leitende Schicht und Belichten des Fotolacks durch eine Maske (44) zur Bildung der Bildelementelektroden (6);
Auftragen eines schwarzen negativen Fotolacks (100) auf die Oberfläche; und
Belichten des negativen Fotolacks durch diese Maske (44) und Entfernen des Teils des negativen Fotolacks, der bei der Bildung der lichtabschirmenden Schicht (10) nicht belichtet wurde.

6. Das Verfahren gemäß Patentanspruch 5, bei dem der negative Fotolack einen Akrylharz mit darin dispergierten Rußschwarzpartikeln enthält.

7. Das Verfahren gemäß Patentanspruch 6, bei dem das Fotolackmaterial weiterhin einen Fotopolymerisationsinitiator enthält, wodurch während des Belichtungsschritts Vernetzungen im Akrylharz gebildet werden.

## Revendications

1. Afficheur à cristaux liquides comprenant un premier et un deuxième substrats transparents (2, 4) séparés par une couche de cristaux liquides (14), une pluralité d'électrodes d'éléments d'image transparentes espacées (6) formées sur la surface intérieure du dit premier substrat, une pluralité d'éléments de commutation (8) formés sur ladite surface adjacents aux électrodes d'éléments d'image, et une couche faisant écran à la lumière (10) formée sur ladite surface entre les éléments d'image et sur les éléments de commutation;
caractérisé en ce que la couche faisant écran à la lumière est composée d'un photorésist négatif noir.

2. Afficheur à cristaux liquides selon la revendication 1, dans lequel la couche faisant écran à la lumière est composée d'un photorésist à base de résine acrylique dans laquelle on a dispersé du noir de carbone.

3. Afficheur à cristaux liquides selon la revendication 2, dans lequel la résine acrylique est réticulée.

4. Afficheur à cristaux liquides selon la revendication 3, dans lequel le photorésist à base de résine acrylique comprend, de plus, un initiateur de polymérisation.

5. Procédé pour fabriquer un afficheur à cristaux liquides comprenant un premier et un deuxième substrats transparents (2, 4) séparés par une couche de cristaux liquides (14), une pluralité d'électrodes d'éléments d'image transparentes espacées (6) formées sur la surface intérieure du dit premier substrat, une pluralité d'éléments de commutation (8) formés sur ladite surface adjacents aux électrodes d'éléments d'image, et une couche faisant écran à la lumière (10) formée sur ladite surface entre les éléments d'image et sur les éléments de commutation, ledit procédé comprenant les étapes consistant à :
former une couche conductrice transparente (40) sur la surface intérieure du premier substrat transparent (2);
appliquer un photorésist positif (42) sur la couche conductrice transparente et exposer le photorésist à travers un masque (44) pour former les électrodes d'éléments d'image (6);
appliquer un photorésist négatif noir (100) sur ladite surface; et
exposer ledit photorésist négatif à travers ledit masque (44), et enlever la partie du photorésist négatif qui n'a pas été exposé pour former ladite couche faisant écran à la lumière (10).

6. Procédé selon la revendication 5, dans lequel le photorésist négatif contient une résine acrylique dans laquelle on a dispersé du noir de carbone.

7. Procédé selon la revendication 6, dans lequel le photorésist comprend, de plus, un initiateur de polymérisation pour former, ainsi, des réticulations dans la résine acrylique au cours de ladite étape d'exposition.
